# EUROPEAN PATENT SPECIFICATION

(11) **EP 1 445 479 B1**
(45) Date of publication and mention of the grant of the patent: **16.11.2005**
(21) Application number: 03002397.2
(22) Date of filing: 04.02.2003
(51) Int. Cl.: F02M 61/16, F02M 51/06

(54) **Thermal compensator unit for use in a metering device**
Kompensator zum Ausgleich von Wärmedehnungen für eine Dosiervorrichtung
Compensateur pour la compensation de dilatations thermiques pour un dispositif de dosage

(43) Date of publication of application: 11.08.2004
(60) Divisional application: 04015516.0
(73) Proprietor: Siemens VDO Automotive S.p.A., 56040 Fauglia (Pisa) (IT)
(72) Inventor: Pulejo, Marco, 56010 PISA (IT); Shen, Jim, 56018 Tirrenia (PISA) (IT)
(74) Representative: Berg, Peter

(56) References cited:
- WO-A-01/98651
- WO-A-02/25096
- US-A1- 2002 179 062
- US-B1- 6 260 541

## Description

The present invention relates to a thermal compensator unit for use in a metering device for dosing pressurised fluid, in particular an injection valve for a fuel injection system in an internal combustion engine, said metering device comprising a housing with a metering opening, a valve needle passing through said housing, having a first end actuated by an actuator assembly outside said housing and a second end controlling the opening and closing of said metering opening, wherein said thermal compensator unit is arranged to cooperate with the actuator unit and the housing to compensate for different thermal expansion of the housing and the actuator assembly to ensure elastic contact between an end stop of the housing, the actuator assembly and the valve needle, said thermal compensator unit comprising transmission means for transmitting an axial extension of the actuator assembly to a compensator housing by urging a hydraulic fluid from a first fluid chamber to a second fluid chamber in an activation phase of said actuator assembly, wherein the first fluid chamber and the second fluid chamber are connected and comprise said hydraulic fluid in a predetermined distribution in an initial state in which the actuator assembly is not active, and a restoring means to return the hydraulic fluid to its initial state from the second fluid chamber to the first fluid chamber in a deactivation phase of the actuator assembly.

Further, the present invention relates to a metering device, in particular an injection valve for a fuel injection system in an internal combustion engine, comprising a housing with a metering opening, a valve needle passing through said housing, having a first end actuated by an actuator assembly outside said housing and a second end controlling the opening and closing of said metering opening.

In the construction of injector valves for gasoline high pressure direct injection through the actuation of an actuator assembly, in particular a piezo-electric group, it is essential that the requirements of fuel flow rate and the geometry of the jet are met under all possible operating conditions of the injector.

Of particular importance is the influence of the temperature on the magnitude of the variations of the principle functional parameters of the injector. Within the required full range of the operating temperature from -40 °C to +150 °C, the flow rate and other parameters that characterise the operation of the injector must remain within predetermined limits of tolerance.

As a result of the thermal expansions experienced by the outer steel housing of the injector, the piezo-electric actuator, having a lower coefficient of thermal expansion than the outer housing, would not maintain proper contact between its fixed end stop surface and the top end of the valve needle.

To deal with this problem, i.e. to compensate the different thermal expansions of housing and piezo-electric stack, the injector valve is typically equipped with a hydraulic thermal compensation unit. As the operation temperature increases, the thermal compensation unit recovers the clearance that would otherwise be created between the valve needle and the piezo-electric actuator, thereby avoiding incorrect and potentially hazardous operation conditions.

Fundamental requirements for such a thermal compensator unit are
- the ability to compensate the different thermal expansions guaranteeing the required capacities of injection to be obtained through the desired lift of the valve needle at the several predictable temperatures for the vehicle's activity,
- effectiveness during the usually fast thermal transitions,
- a total reliability of the device, and
- low manufacturing and assembly times and costs.

US 2002/0179062 Al discloses a hydraulic compensator assembly for a piezoelectric fuel injector comprising a supply reservoir with bellows filled with a hydraulic fluid, a compression spring arranged outside the supply reservoir compressing the supply reservoir and an orifice that functions as a throttling passage that connects the supply reservoir with a fluid chamber of which the volume is defined by an axial position of a piston. An axial extension of a piezoelectric actuator is transmitted to the piston to urge the hydraulic fluid from the fluid chamber to the supply reservoir in an activation phase of the piezoelectric actuator. The compression spring returns the hydraulic fluid from the supply reservoir to the fluid chamber in a deactivation phase of the piezoelectric actuator, i.e. it resumes the equilibrium position. Plastic or rubber dynamic sealing elements, i.e. o-rings are used between the piston and the housing of the hydraulic compensator assembly to provide a sealing for the fluid chamber. However, these plastic or rubber dynamic sealing elements cannot be confidentially considered as sealing features that allow a zero-leakage performance. Also, these plastic or rubber dynamic sealing elements do apply friction forces between the sliding elements so that the sliding parts are not able to recover exactly the same equilibrium position without any residual misalignment due to friction forces at each temperature condition.

In view of the foregoing it is an object underlying the present invention to provide a thermal compensator unit for use in a metering device of the above-mentioned type of which the equilibrium position is easily adjustable, as well as a metering device including such a thermal compensator unit.

This object is achieved by a thermal compensator unit with the features of appended claims 1 or 5.

Advantageous embodiments of the thermal compensator unit according to the present invention are disclosed in the respective following dependent claims.

A metering device according to the present invention is defined in claim 11.

According to a first preferred embodiment of the invention, the thermal compensator unit according to the preamble of claim 1 provides that a force to return the hydraulic fluid that is generated by said restoring means is adjustable during an assembly process in which said thermal compensator unit is assembled with said metering device. In other words, said restoring means provides a means to adjust its preload force instead of the requirement to change the design of the thermal compensator unit. Therewith, the equilibrium position is easily adjustable during the assembling of the thermal compensator unit in the metering device by adjusting the preload or pre-compression force. Said restoring means is arranged between an upper compensator housing part and a lower compensator housing part that are moveable against each other to adjust said pre-compression.

According to a second preferred embodiment of the invention, the thermal compensator unit according to the preamble of claim 5 provides that a force to return the hydraulic fluid that is generated by said restoring means is adjustable during an assembly process in which said thermal compensator unit is assembled with said metering device. In other words, said restoring means provides a means to adjust its preload force instead of the requirement to change the design of the thermal compensator unit. Therewith, the equilibrium position is easily adjustable during the assembling of the thermal compensator unit in the metering device by adjusting the preload or pre-compression force. Said restoring means is arranged between an upper compensator housing part and a lower compensator housing part that are fixed against each other and at least one of the upper compensator housing part and the lower compensator housing part comprises a moveable guiding element for said restoring means to adjust said pre-compression.

Further, according to the invention, the metering device according to the preamble of claim 11 provides a thermal compensator unit according to the present invention.

Preferably, the thermal compensator unit according to the first preferred embodiment of the present invention further comprises a helical spring and/or a Belleville washer that gets pre-compressed during said assembly process and gets further compressed during the activation pace of said actuator assembly.

Preferably, said upper compensator housing part and said lower compensator housing part might be slidable against each other to adjust said pre-compression and might get fixed against each other to set a predetermined pre-compression. As an alternative, said upper compensator housing part and said lower compensator housing part might be screwed together, wherein said pre-compression gets adjusted by more or less screwing both parts together.

Preferably, said moveable guiding element might be a hollow screw in which one end of said restoring means is arranged.

Preferably, the thermal compensator unit provides at least one respective elastic element for said first fluid chamber and said second fluid chamber so that a respective volume of the first fluid chamber and the second fluid chamber is variable within predetermined limits. Therewith, the first and second fluid chambers can be provided hermetically sealed with variable volumes without the need to use plastic or rubber dynamic sealing elements between the sliding parts. This leads to the ability to recover exactly the same equilibrium position at each temperature condition, since no residual misalignment due to friction forces between the sliding parts occurs. A side-effect is that a zero-leakage performance is allowed. In this case said elastic element is preferably a metal membrane.

Alternatively or additionally preferably, said transmission means is connected to said elastic element of said first fluid chamber and/or builds a part thereof, and said restoring means is connected to said elastic element of said second fluid chamber and/or builds a part thereof. In any thermal compensator unit according to the present invention said first fluid chamber and said second fluid chamber might be separated by a valve that generates a high resistance for fluid passing from the first fluid chamber to the second fluid chamber and a low resistance for fluid passing from the second fluid chamber to the first fluid chamber.

The invention, both its construction and its method of operation together with additional objects and advantages thereof, will best be understood from the following description of two specific exemplary embodiments when read in conjunction with the accompanying drawings, wherein
- Fig. 1: is a schematic axially cross section of the thermal compensator unit according to a first exemplary embodiment of the present invention, and
- Fig. 2: is a schematic axially cross section of the thermal compensator unit according to a second exemplary embodiment of the present invention.

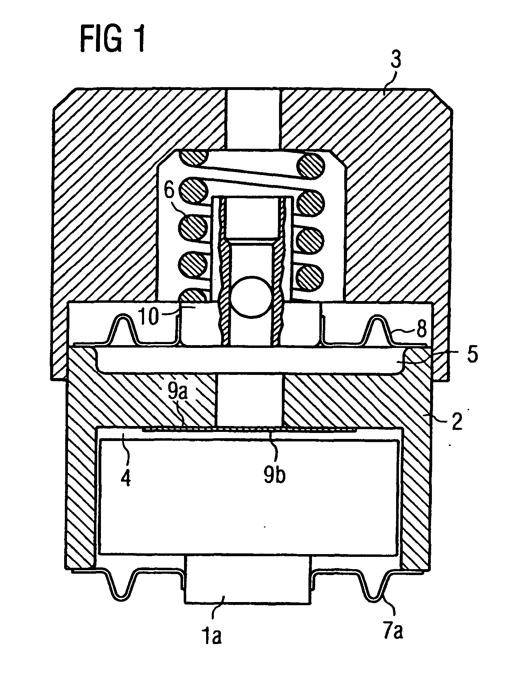

Fig. 1 shows a thermal compensator with an adjustable stiffness, i.e. setting mechanism for the equilibrium position, based on a sliding sleeve. As outlined in Fig. 1, a compensator housing comprises an upper compensator housing part 3 and a lower compensator housing part 2, wherein the lower compensator housing part 2 contains a slidable piston 1a, which is able to slide axially inside the cylindrical lower compensator housing part 2. The upper compensator housing part 3 rests via its upper surface on the fix end stop of the injector, while the lower end rod of the piston 1a is in contact with the actuator assembly, e.g. the piezo-electric actuator. The lower end rod of the piston 1a is hermetically connected to a first metal membrane 7a that seals the bottom of the first fluid chamber 4 in which the piston 1a can axially slide. On the opposite side of the lower compensator housing part 2, i.e. the other side with respect to the side on which the piston 1a and the first metal membrane 7a are arranged, a second fluid chamber 5 is formed which is sealed by a second metal membrane 8 and a first guiding element 10 that holds a first end of a helical spring 6, i.e. provides a seat for the helical spring 6.

The other end of the helical spring 6 rests against the inside of the upper compensator housing part 3 which is built as a sleeve overlapping the lower compensator housing part 2. The first and second fluid chambers 4, 5 are separated by a valve 9a which is formed by a spot welded metal plate having an orifice 9b to generate a high resistance for fluid passing from the first fluid chamber 4 to the second fluid chamber 5 and a low resistance for fluid passing from the second fluid chamber 5 to the first fluid chamber 4. The fluid with which both fluid chambers 4, 5 are fully filled and in which the piston 1a is therewith fully emerged might be silicone oil.

In the following, the operation of the thermal compensator according to the first preferred exemplary embodiment of the present invention will be described. As mentioned, the top surface of the upper compensator housing part 3, i.e. the sleeve, is in contact with the inlet fitting of the injector and the lower surface of the piston 1a is in contact with the actuator assembly, e.g. a piezo-electric actuator. The valve 9a which might be formed as a disk is welded by two (or more) spots at the portion of the lower compensator housing part 2 that separates the first and the second fluid chambers 4, 5 from each other and builds a fluid passage between them. The valve 9a presents a high hydraulic resistance during the actuation phase of the piezo-stack and allows a bigger oil passage due to the flapping effect of this metallic disk 9a during the following deactivation phase of the piezo-stack.

This effect is given, since during the actuation phase of the piezo-stack, the piston 1a is pushed upwardly from the piezo-electric group, which action forces the silicone oil contained in the first fluid chamber 4 to pass through the orifice 9b in the disk 9a into the second fluid chamber 5. On the other hand, during the deactivation phase of the piezo-stack, the oil contained in the second fluid chamber 5 can quickly reflow into the first fluid chamber 4 through the gap generated between the surface on which the valve 9a is spot-welded and the valve 9a due to the flapping effect of the disk that forms the valve 9a at portions in which it is not spot-welded to said surface.

The relative position of piston 1a and upper compensator housing part will be changed by thermal expansion. In such relatively slow motion, the hydraulic fluid will flow through the orifice 9a, the piston will get a new equilibrium position and the volumes of chambers 4 and 5 will be changed accordingly, so as the shape deformation of the metal membranes 7a, 8.

At each injection, the continuous position recovery of the piston 1a is guaranteed from the force of the spring 6 that pressurises the second fluid chamber 5, since it is clamped between the first guiding element 10 and the upper compensator housing part 3.

During the assembly process, this spring force can be set through the sliding movement between the upper compensator housing part 3 and the lower compensator housing part 2. After the calibration, these housing parts 2, 3 will be welded together and the spring preload or pre-compression will be "freezed". As mentioned before, the upper compensator housing part 2 might alternatively be screwed onto the lower compensator housing part 3 and the spring force can be set by more or less screwing the housing parts together. Fixing the relative position of both housing parts might then perform the freezing of the spring preload.

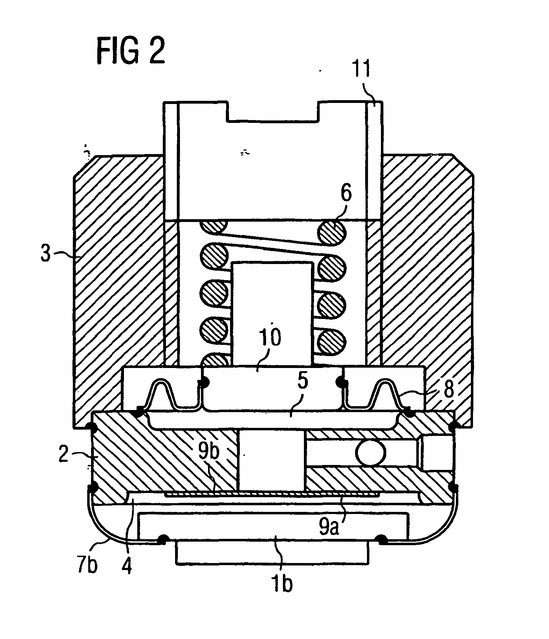

Fig. 2 shows a thermal compensator according to the second exemplary embodiment of the present invention wherein the preload or pre-compression of the helical spring is adjustable with a screw that guides the second end of the helical spring 6, which screw 11 is fitted inside the upper compensator housing part 3. Apart from this screw 11 the thermal compensator according to the second exemplary embodiment is rather similar to that according to the first exemplary embodiment shown in Fig. 1, with the additional exception that not a slidable piston 1a is provided to be in contact with the actuator assembly, but a plate 1b which is welded to a metal membrane 7b with a saucer-like shape that is welded to the lower compensator housing part 2 to build the first fluid chamber 4.

The function is identical to that of the first exemplary embodiment, i.e. the oil can only flow through the orifice 9b of the valve 9a, since the oil pressure itself that suddenly rises up, seals the passage through the side of the disk by a metal-to-metal sealing contact. During the deactivation phase of the piezo-stack, the oil contained in the second fluid chamber 5 can quickly reflow into the first fluid chamber 4 through the gap generated between the lower surface of the lower compensator housing part 2 to which the valve is spot-welded and the disk of the valve 9b due to its flapping effect. The relative position of piston 1b and upper compensator housing part will be changed by thermal expansion. In such relatively slow motion, the hydraulic fluid will flow through the orifice 9a, the piston will get a new equilibrium position and the volumes of chambers 4 and 5 will be changed accordingly, so as the shape deformation of the metal membranes 7b, 8. In this embodiment, the continuous position recovery of the plate 1b is guaranteed from the force of the spring 6 which is clamped between the first guide 10 and the screw 11 that forms a second guide. The spring 6 keeps the oil pressurised so that the oil flows back after each injection for restoring the pressure equilibrium between the fluid chambers, i.e. so that the equilibrium position that is defined by the pre-compression of the spring which might be adjusted with the screw 11 and which is constant for all temperature ranges due to the usage of elastic elements, such as the shown metal membranes, to have variable volumes of the first and second fluid chambers 4, 5. As mentioned above, during the assembly process, the spring force can be set by screwing the screw more or less into the upper compensator housing part 3.

According to the present invention a sealing that can reach a zero leaking range is achieved together with an elimination of friction forces between the sliding parts and the possibility of calibrating the preload force during the assembly and calibration phase without changing the hydraulic and reservoir chamber height, that is without moving any component other than the adjusting screw and/or the sliding upper compensator housing part 3.

Therewith, a thermal compensator unit is disclosed that allows to precisely set and keep an equilibrium position by providing an adjustable pre-compression on one of two fluid chambers. Further, the fluid chambers respectively comprise at least one elastic element so that the respective volume is variable, which elastic elements hermetically seal the fluid chambers, which leads to the effect that no plastic or rubber dynamic sealing is necessary between the sliding parts in a hydraulic compensator, in particular since the moving parts of the hydraulic compensator are preferably hermetically connected to said respective elastic element and/or build a part thereof.

## Claims

1. A thermal compensator unit for use in a metering device for dosing pressurised fluid, in particular an injection valve for a fuel injection system in an internal combustion engine, said metering device comprising
- a housing with a metering opening,
- a valve needle passing through said housing, having a first end actuated by an actuator assembly outside said housing and a second end controlling the opening and closing of said metering opening,
wherein said thermal compensator unit is suitable to be arranged to cooperate with the actuator unit and the housing to compensate for different thermal expansion of the housing and the actuator assembly to ensure elastic contact between an end stop of the housing, the actuator assembly and the valve needle, said thermal compensator unit comprising
- transmission means (1a, 1b) for transmitting an axial extension of the actuator assembly to a compensator housing (2, 3) by urging a hydraulic fluid from a first fluid chamber (4) to a second fluid chamber (5) in an activation phase of said actuator assembly, wherein the first fluid chamber (4) and the second fluid chamber (5) are connected and comprise said hydraulic fluid in a predetermined distribution in an initial state in which the actuator assembly is not active, and
- a restoring means (6) to return the hydraulic fluid to its initial state from the second fluid chamber (5) to the first fluid chamber (4) in a deactivation phase of the actuator assembly and a force to return the hydraulic fluid that is generated by said restoring means (6) is adjustable during an assembly process in which said thermal compensator unit is assembled with said metering device,
**characterised in that**
said restoring means (6) is arranged between an upper compensator housing part (3) and a lower compensator housing part (2) that are moveable against each other to adjust said pre-compression.

2. The thermal compensator unit according to claim 1,
**characterised in that**
said restoring means comprises a helical spring (6) and/or a Belleville washer that gets pre-compressed during said assembly process and gets further compressed during the activation phase of said actuator assembly.

3. The thermal compensator unit according to claim 2,
**characterised in that**
said upper compensator housing part (3) and said lower compensator housing part (2) are slidable against each other to adjust said pre-compression and are fixed against each other to set a predetermined pre-compression.

4. The thermal compensator unit according to claim 2,
**characterised in that**
said upper compensator housing part and said lower compensator housing part are screwed together, wherein said pre-compression gets adjusted by more or less screwing both parts together.

5. A thermal compensator unit for use in a metering device for dosing pressurised fluid, in particular an injection valve for a fuel injection system in an internal combustion engine, said metering device comprising
- a housing with a metering opening,
- a valve needle passing through said housing, having a first end actuated by an actuator assembly outside said housing and a second end controlling the opening and closing of said metering opening,
wherein said thermal compensator unit is suitable to be arranged to cooperate with the actuator unit and the housing to compensate for different thermal expansion of the housing and the actuator assembly to ensure elastic contact between an end stop of the housing, the actuator assembly and the valve needle, said thermal compensator unit comprising
- transmission means (1a, 1b) for transmitting an axial extension of the actuator assembly to a compensator housing (2, 3) by urging a hydraulic fluid from a first fluid chamber (4) to a second fluid chamber (5) in an activation phase of said actuator assembly, wherein the first fluid chamber (4) and the second fluid chamber (5) are connected and comprise said hydraulic fluid in a predetermined distribution in an initial state in which the actuator assembly is not active, and
- a restoring means (6) to return the hydraulic fluid to its initial state from the second fluid chamber (5) to the first fluid chamber (4) in a deactivation phase of the actuator assembly and a force to return the hydraulic fluid that is generated by said restoring means (6) is adjustable during an assembly process in which said thermal compensator unit is assembled with said metering device,
**characterised in that**
said restoring means (6) is arranged between an upper compensator housing part (3) and a lower compensator housing part (2) that are fixed against each other and at least one of the upper compensator housing part (2) and the lower compensator housing part comprises a moveable guiding element (11) for said restoring means to adjust said pre-compression.

6. The thermal compensator unit according to claim 5,
**characterised in that**
said moveable guiding element (11) is a hollow screw in which one end of said restoring means is arranged.

7. The thermal compensator unit according to anyone of the preceding claims,
**characterised in that**
said first fluid chamber (4) and said second fluid chamber (5) respectively comprise at least one elastic element (7a, 7b, 8) so that a respective volume of the first fluid chamber (4) and the second fluid chamber (5) is variable within predetermined limits.

8. The thermal compensator unit according to claim 7,
**characterised in that**
said elastic element (7a, 7b, 8) is a metal membrane.

9. The thermal compensator unit according to claim 7 or 8,
**characterised in that**
said transmission means (1a, 1b) is connected to said elastic element (7a, 7b) of said first fluid chamber (4) and/or builds a part thereof, and said restoring means (6) is connected to said elastic element (8) of said second fluid chamber (5) and/or builds a part thereof.

10. The thermal compensator unit according to anyone of the preceding claims,
**characterised in that**
said first fluid chamber (4) and said second fluid chamber (5) are separated by a valve (9a, 9b) that generates a high resistance for fluid passing from the first fluid chamber (4) to the second fluid chamber (5) and a low resistance for fluid passing from the second fluid chamber (5) to the first fluid chamber (4).

11. A metering device, in particular an injection valve for a fuel injection system in an internal combustion engine, comprising
- a housing with a metering opening,
- a valve needle passing through said housing, having a first end actuated by an actuator assembly outside said housing and a second end controlling the opening and closing of said metering opening,
**characterised by**
a thermal compensator unit according to anyone of claims 1 to 10.

## Patentansprüche

1. Thermokompensatoreinheit zur Verwendung in einer Dosiervorrichtung zum Dosieren eines unter Druck stehenden Strömungsmittels, insbesondere in einem Einspritzventil für ein Kraftstoffeinspritzsystem in einer Brennkraftmaschine, wobei die Dosiervorrichtung umfaßt:
- ein Gehäuse mit einer Dosieröffnung,
- eine sich durch das Gehäuse erstreckende Ventilnadel mit einem ersten Ende, das von einer Betätigungseinheit außerhalb des Gehäuses betätigt wird, und einem zweiten Ende, daß das Öffnen und Schließen der Dosieröffnung steuert,
- wobei die Thermokompensatoreinheit so angeordnet werden kann, daß sie mit der Betätigungseinheit und dem Gehäuse zusammenwirkt, um eine unterschiedliche Wärmeausdehnung des Gehäuses und der Betätigungseinheit zu kompensieren und einen elastischen Kontakt zwischen einem Endanschlag des Gehäuses, der Betätigungseinheit und der Ventilnadel sicherzustellen,
- wobei die Thermokompensatoreinheit umfaßt:
- eine Übertragungseinrichtung (1a,1b) zur Übertragung einer axialen Ausdehnung der Betätigungseinheit auf ein Kompensatorgehäuse (2,3) durch Pressen eines hydraulischen Strömungsmittels von einer ersten Strömungsmittelkammer (4) in eine zweite Strömungsmittelkammer (5) in einer Aktivierungsphase der Betätigungseinheit, wobei die erste Strömungsmittelkammer (4) und die zweite Strömungsmittelkammer (5) miteinander verbunden sind und das hydraulische Strömungsmittel in einer vorgegebenen Verteilung in einem Anfangszustand enthalten, in dem die Betätigungseinheit nicht aktiv ist, und
- eine Wiederherstelleinrichtung (6) zur Zurückführung des hydraulischen Strömungsmittels in seinen Ausgangszustand von der zweiten Strömungsmittelkammer (5) zur ersten Strömungsmittelkammer (4) in einer Deaktivierungsphase der Betätigungseinheit, wobei eine zur Rückführung des hydraulischen Strömungsmittels dienende Kraft, die von der Wiederherstelleinrichtung (6) erzeugt wird, während eines Montageprozesses, in dem die Thermokompensatoreinheit mit der Dosiervorrichtung zusammengebaut wird, einstellbar ist,
**dadurch gekennzeichnet, daß** die Wiederherstelleinrichtung (6) zwischen einem oberen Kompensatorgehäuseteil (3) und einem unteren Kompensatorgehäuseteil (2), die gegeneinander beweglich sind, um die Vorkompression einzustellen, angeordnet ist.

2. Thermokompensatoreinheit nach Anspruch 1, **dadurch gekennzeichnet, daß** die Wiederherstelleinrichtung eine Schraubenfeder (6) und/oder eine Tellerfeder umfaßt, die während des Montageprozesses vorkomprimiert wird und während der Aktivierungsphase der Betätigungseinheit weiter komprimiert wird.

3. Thermokompensatoreinheit nach Anspruch 2, **dadurch gekennzeichnet, daß** das obere Kompensatorgehäuseteil (3) und das untere Kompensatorgehäuseteil (2) gegeneinander gleiten können, um die Vorkompression einzustellen, und gegeneinander fixiert sind, um eine vorgegebene Vorkompression einzustellen.

4. Thermokompensatoreinheit nach Anspruch 2, **dadurch gekennzeichnet, daß** das obere Kompensatorgehäuseteil und das untere Kompensatorgehäuseteil zusammengeschraubt sind, wobei die Vorkompression eingestellt wird, indem beide Teile mehr oder weniger verschraubt werden.

5. Thermokompensatoreinheit zur Verwendung in einer Dosiervorrichtung zum Dosieren eines unter Druck stehenden Strömungsmittels, insbesondere in einem Einspritzventil für ein Kraftstoffeinspritzsystem in einer Brennkraftmaschine, wobei die Dosiervorrichtung umfaßt:
- ein Gehäuse mit einer Dosieröffnung,
- eine sich durch das Gehäuse erstreckende Ventilnadel mit einem ersten Ende, das von einer Betätigungseinheit außerhalb des Gehäuses betätigt wird, und einem zweiten Ende, daß das Öffnen und Schließen der Dosieröffnung steuert,
- wobei die Thermokompensatoreinheit so angeordnet werden kann, daß sie mit der Betätigungseinheit und dem Gehäuse zusammenwirkt, um eine unterschiedliche Wärmeausdehnung des Gehäuses und der Betätigungseinheit zu kompensieren und einen elastischen Kontakt zwischen einem Endanschlag des Gehäuses, der Betätigungseinheit und der Ventilnadel sicherzustellen,
- wobei die Thermokompensatoreinheit umfaßt:
- eine Übertragungseinrichtung (1a, 1b) zur Übertragung einer axialen Ausdehnung der Betätigungseinheit auf ein Kompensatorgehäuse (2,3) durch Pressen eines hydraulischen Strömungsmittels aus einer ersten Strömungsmittelkammer (4) in eine zweite Strömungsmittelkammer (5) in einer Aktivierungsphase der Betätigungseinheit, wobei die erste Strömungsmittelkammer (4) und die zweite Strömungsmittelkammer (5) miteinander verbunden sind und das hydraulische Strömungsmittel in einer vorgegebenen Verteilung in einem Anfangszustand, in dem die Betätigungseinheit nicht aktiv ist, enthalten, und
- eine Wiederherstelleinrichtung (6) zur Zurückführung des hydraulischen Strömungsmittels in seinen Ausgangszustand von der zweiten Strömungsmittelkammer (5) zur ersten Strömungsmittelkammer (4) in einer Deaktivierungsphase der Betätigungseinheit, wobei eine Kraft zur Zurückführung des hydraulischen Strömungsmittels, die von der Wiederherstelleinrichtung (6) erzeugt wird, während eines Montageprozesses, in dem die Thermokompensatoreinheit mit der Dosiervorrichtung zusammengebaut wird, einstellbar ist,
- **dadurch gekennzeichnet, daß**
die Wiederherstelleinrichtung (6) zwischen einem oberen Kompensatorgehäuseteil (3) und einem unteren Kompensatorgehäuseteil (2), die gegeneinander fixiert sind, angeordnet ist, wobei mindestens ein Teil des oberen Kompensatorgehäuseteiles (3) und des unteren Kompensatorgehäuseteiles (2) ein bewegliches Führungselement (11) für die Wiederherstelleinrichtung zur Einstellung der Vorkompression umfaßt.

6. Thermokompensatoreinheit nach Anspruch 5, **dadurch gekennzeichnet, daß** das bewegliche Führungselement (11) eine Hohlschraube ist, in der ein Ende der Wiederherstelleinrichtung angeordnet ist.

7. Thermokompensatoreinheit nach einem der vorangehenden Ansprüche, **dadurch gekennzeichnet, daß** die erste Strömungsmittelkammer (4) und die zweite Strömungsmittelkammer (5) jeweils mindestens ein elastisches Element (7a,7b,8) umfassen, so daß das entsprechende Volumen der ersten Strömungsmittelkammer (4) und der zweiten Strömungsmittelkammer (5) innerhalb von vorgegebenen Grenzen variabel ist.

8. Thermokompensatoreinheit nach Anspruch 7, **dadurch gekennzeichnet, daß** das elastische Element (7a,7b,8) eine Metallmembran ist.

9. Thermokompensatoreinheit nach Anspruch 7 oder 8, **dadurch gekennzeichnet, daß** die Übertragungseinrichtung (1a, 1b) mit dem elastischen Element (7a,7b) der ersten Strömungsmittelkammer (4) verbunden ist und/oder einen Teil hiervon bildet und daß die Wiederherstelleinrichtung (6) mit dem elastischen Element (8) der zweiten Strömungsmittelkammer (5) verbunden ist und/oder einen Teil hiervon bildet.

10. Thermo kompensatoreinheit nach einem der vorangehenden Ansprüche, **dadurch gekennzeichnet, daß** die erste Strömungsmittelkammer (4) und die zweite Strömungsmittelkammer (5) durch ein Ventil (9a,9b) getrennt sind, das einen hohen Widerstand für Strömungsmittel vorsieht, das von der ersten Strömungsmittelkammer (4) zur zweiten Strömungsmittelkammer (5) strömt, und einen niedrigen Widerstand für Strömungsmittel, das von der zweiten Strömungsmittelkammer (5) zur ersten Strömungsmittelkammer (4) strömt.

11. Dosiervorrichtung, insbesondere Einspritzventil für ein Kraftstoffeinspritzsystem in einer Brennkraftmaschine, die umfaßt:
- ein Gehäuse mit einer Dosieröffnung,
- eine sich durch das Gehäuse erstreckende Ventilnadel mit einem ersten Ende, das von einer Betätigungseinheit außerhalb des Gehäuses betätigt wird, und einem zweiten Ende, daß das Öffnen und Schließen der Dosieröffnung steuert,
**gekennzeichnet durch** eine Thermokompensatoreinheit nach einem der Ansprüche 1 bis 10.

## Revendications

1. Unité de compensateur thermique destinée à un dispositif de mesure pour doser un fluide pressurisé, en particulier une soupape d'injection pour un système d'injection de carburant dans un moteur à combustion interne, ledit dispositif de mesure comprenant
- un corps avec une ouverture de mesure,
- une aiguille de soupape traversant ledit corps, ayant une première extrémité activée par un ensemble d'actionneur en dehors dudit corps et une seconde extrémité commandant l'ouverture et la fermeture de ladite ouverture de mesure,
ladite unité de compensateur thermique étant appropriée pour être agencée pour coopérer avec l'unité d'actionneur et le corps pour compenser la différence de dilatation thermique du corps et de l'ensemble d'actionneur pour assurer un contact élastique entre une butée terminale du corps, l'ensemble d'actionneur et l'aiguille de soupape, ladite unité de compensateur thermique comprenant
- des moyens de transmission (1a, 1b) pour transmettre une extension axiale de l'ensemble d'actionneur à un corps de compensateur (2, 3) en refoulant un fluide hydraulique d'une première chambre de fluide (4) à une seconde chambre de fluide (5) dans une phase d'activation dudit ensemble d'actionneur, la première chambre de fluide (4) et la seconde chambre de fluide (5) étant connectées et contenant ledit fluide hydraulique dans une distribution prédéterminée dans un état initial dans lequel l'ensemble d'actionneur n'est pas activé, et
- un moyen de rétablissement (6) pour rendre le fluide hydraulique à son état initial en le renvoyant de la seconde chambre de fluide (5) à la première chambre de fluide (4) dans une phase de désactivation de l'ensemble d'actionneur, et une force pour renvoyer le fluide hydraulique qui est générée par ledit moyen de rétablissement (6) étant ajustable au cours d'une opération d'assemblage dans laquelle ladite unité de compensateur thermique est assemblée avec ledit dispositif de mesure.
**caractérisée en ce que**
ledit moyen de rétablissement (6) est agencé entre une partie supérieure de corps de compensateur (3) et une partie inférieure de corps de compensateur (2) qui sont mobiles entre elles pour ajuster ladite compression initiale.

2. Unité de compensateur thermique selon la revendication 1,
**caractérisée en ce que**
ledit moyen de rétablissement comprend un ressort hélicoïdal (6) et/ou une rondelle de Belleville qui sont initialement comprimés lors de l'opération d'assemblage et sont davantage comprimés lors de l'opération d'activation dudit ensemble actionneur.

3. Unité de compensateur thermique selon la revendication 2,
**caractérisée en ce que**
ladite partie supérieure de corps de compensateur (3) et ladite partie inférieure de corps de compensateur (2) sont coulissantes entre elles pour ajuster ladite compression initiale et sont solidarisées entre elles pour appliquer une compression initiale prédéterminée.

4. Unité de compensateur thermique selon la revendication 2,
**caractérisée en ce que**
ladite partie supérieure de corps de compensateur et ladite partie inférieure de corps de compensateur sont vissées ensemble, ladite compression initiale étant ajustée en vissant plus ou moins les deux parties ensemble.

5. Unité de compensateur thermique destinée à un dispositif de mesure pour doser un fluide pressurisé, en particulier une soupape d'injection pour un système d'injection de carburant dans un moteur à combustion interne, ledit dispositif de mesure comprenant
- un corps avec une ouverture de mesure,
- une aiguille de soupape traversant ledit corps, ayant une première extrémité activée par un ensemble d'actionneur en dehors dudit corps et une seconde extrémité commandant l'ouverture et la fermeture de ladite ouverture de mesure,
ladite unité de compensateur thermique étant appropriée pour être agencée pour coopérer avec l'unité d'actionneur et le corps pour compenser la différence de dilatation thermique du corps et de l'ensemble d'actionneur pour assurer un contact élastique entre une butée terminale du corps, l'ensemble d'actionneur et l'aiguille de soupape, ladite unité de compensateur thermique comprenant
- des moyens de transmission (1a, 1b) pour transmettre une extension axiale de l'ensemble d'actionneur à un corps de compensateur (2, 3) en refoulant un fluide hydraulique d'une première chambre de fluide (4) à une seconde chambre de fluide (5) dans une phase d'activation dudit ensemble d'actionneur, la première chambre de fluide (4) et la seconde chambre de fluide (5) étant connectées et contenant ledit fluide hydraulique dans une distribution prédéterminée dans un état initial dans lequel l'ensemble d'actionneur n'est pas activé, et
- un moyen de rétablissement (6) pour rendre le fluide hydraulique à son état initial en le renvoyant de la seconde chambre de fluide (5) à la première chambre de fluide (4) dans une phase de désactivation de l'ensemble d'actionneur, et une force pour renvoyer le fluide hydraulique qui est générée par ledit moyen de rétablissement (6) étant ajustable au cours d'une opération d'assemblage dans laquelle ladite unité de compensateur thermique est assemblée avec ledit dispositif de mesure.
**caractérisée en ce que**
ledit moyen de rétablissement (6) est agencé entre une partie supérieure de corps de compensateur (3) et une partie inférieure de corps de compensateur (2) qui sont solidarisées entre elles et au moins la partie supérieure de corps de compensateur (2) ou la partie inférieure de corps de compensateur comprend un élément de guidage mobile (11) pour permettre audit moyen de rétablissement d'ajuster ladite compression initiale.

6. Unité de compensateur thermique selon la revendication 5,
**caractérisée en ce que**
ledit élément de guidage mobile (11) est une vis creuse dans laquelle une extrémité dudit moyen de rétablissement est agencée.

7. Unité de compensateur thermique selon l'une quelconque des revendications précédentes,
**caractérisée en ce que**
ladite première chambre de fluide (4) et ladite seconde chambre de fluide (5) comprennent chacune au moins un élément élastique (7a, 7b, 8) de sorte qu'un volume de chacune des première chambre de fluide (4) et seconde chambre de fluide (5) est variable dans des limites prédéterminées.

8. Unité de compensateur thermique selon la revendication 7,
**caractérisée en ce que**
ledit élément élastique (7a, 7b, 8) est une membrane métallique.

9. Unité de compensateur thermique selon la revendication 7 ou 8,
**caractérisée en ce que**
ledit moyen de transmission (1a, 1b) est connecté audit élément élastique (7a, 7b) de ladite première chambre de fluide (4) et/ou constitue une partie de celle-ci, et ledit moyen de rétablissement (6) est connecté audit élément élastique (8) de ladite seconde chambre de fluide (5) et/ou constitue une partie de celle-ci.

10. Unité de compensateur thermique selon l'une quelconque des revendications précédentes,
**caractérisée en ce que**
ladite première chambre de fluide (4) et ladite seconde chambre de fluide (5) sont séparées par une soupape (9a, 9b) qui génère une forte résistance au passage du fluide de la première chambre de fluide (4) à la seconde chambre de fluide (5) et une faible résistance au passage du fluide de la seconde chambre de fluide (5) à la première chambre de fluide (4).

11. Dispositif de mesure, en particulier soupape d'injection pour un système d'injection de carburant dans un moteur à combustion interne, comprenant
- un corps avec une ouverture de mesure,
- une aiguille de soupape traversant ledit corps, ayant une première extrémité activée par un ensemble d'actionneur en dehors dudit corps et une seconde extrémité commandant l'ouverture et la fermeture de ladite ouverture de mesure,
**caractérisé par**
une unité de compensateur thermique selon l'une quelconque des revendications 1 à 10.
